# EUROPEAN PATENT APPLICATION

(11) **EP 4 092 450 A1**
(43) Date of publication of application: **23.11.2022**
(21) Application number: 22172230.9
(22) Date of filing: 09.05.2022
(51) Int. Cl.: G01W 1/10, G01W 1/14, G08G 1/01, G08G 1/0967, G01W 1/00

(54) **METHODS AND SYSTEMS FOR ESTIMATING LOCAL WEATHER CONDITIONS OF ROADWAYS**

(30) Priority: 20.05.2021 US 202163191148 P; 03.05.2022 US 202217735571; 03.05.2022 US 202217735618; 03.05.2022 US 202217735757; 03.05.2022 US 202217735804
(71) Applicant: GEOTAB Inc., Oakville, ON L6H 7V2 (CA)
(72) Inventor: Prystawski, Benjamin Paul, Oakville, L6H 7V2 (CA); Lewis, Daniel Jacob, Oakville, L6H 7V2 (CA); Bradley, Robert, Oakville, L6H 7V2 (CA)
(74) Representative: Vossius, Corinna

(57) **Abstract**

Described herein are methods of estimating a chance of precipitation in an area that include identifying one or more vehicles in the area and determining the likelihood of precipitation using telematics data for the one or more vehicles in the area. Also described herein are methods that include receiving telematics data from a plurality of vehicles, wherein the telematics data is associated with a location, analyzing the telematics data to identify vehicle events associated with one or more segments of road, analyzing weather information associated with the one or more segments of road, and determining a correlation between the weather information and the vehicle events.

## Description

### FIELD

Some embodiments described herein are related to techniques for analyzing telematics data collected by/from vehicles to estimate a chance it is precipitating in an area, such as whether it is raining, snowing, or otherwise precipitating along a segment of road or in a geographic area. The telematics data may be or include data relating to a vehicle or operation of a vehicle associated with the area, such as data relating to operation of a car. In some such embodiments, vehicles may not include sensors configured to directly measure precipitation. Rather, one or more proxies may be used instead of direct precipitation measurements to estimate a chance the area is experiencing precipitation at a collection time for the telematics data. For example, windshield wiper activation may be used as a proxy in determining precipitation. Techniques are described herein for determining a correlation between weather information and vehicle events. In some such embodiments, a correlation between weather information and certain vehicle events may be used to determine a safety rating associated with a portion of road, such as whether the safety of the road may be weather dependent.

### BACKGROUND

Precipitation, and weather more generally, may affect both road conditions and driving behavior. For example, rain may be associated with slick roads, and low temperatures may be associated with icy roads. In inclement weather, vehicle operators may drive more slowly and/or more cautiously to compensate for compromised road conditions. Additionally, unfavorable driving conditions (e.g., icy roads, low visibility during rain) may be associated with adverse outcomes such as an increased rate of collisions and/or more congestion (e.g., if vehicle operators reduce driving speeds to compensate for the unfavorable driving conditions). Furthermore, knowledge of the likelihood of precipitation may affect driver behavior. For example, a high chance of rain may discourage some people from driving all together.

### SUMMARY

In some embodiments, a method of estimating a chance of precipitation in an area includes identifying one or more vehicles in the area and determining the likelihood of precipitation using telematics data for the one or more vehicles in the area.

In some embodiments, a system includes at least one processor and at least one storage medium having encoded thereon executable instructions that, when executed by the at least one processor, cause the at least one processor to carry out a method of estimating a chance of precipitation in an area. The method includes identifying one or more vehicles in the area and determining the likelihood of precipitation using telematics data for the one or more vehicles in the area.

In some embodiments, a method includes receiving telematics data from a plurality of vehicles, wherein the telematics data is associated with a location, analyzing the telematics data to identify vehicle events associated with one or more segments of road, analyzing weather information associated with the one or more segments of road, and determining a correlation between the weather information and the vehicle events.

In some embodiments, a system includes at least one processor and at least one storage medium having encoded thereon executable instructions that, when executed by the at least one processor, cause the at least one processor to carry out a method. The method includes receiving telematics data from a plurality of vehicles, wherein the telematics data is associated with a location, analyzing the telematics data to identify vehicle events associated with one or more segments of road, analyzing weather information associated with the one or more segments of road, and determining a correlation between the weather information and the vehicle events.

It should be appreciated that the foregoing concepts, and additional concepts discussed below, may be arranged in any suitable combination, as the present disclosure is not limited in this respect. Further, other advantages and novel features of the present disclosure will become apparent from the following detailed description of various non-limiting embodiments when considered in conjunction with the accompanying figures.

### BRIEF DESCRIPTION OF DRAWINGS

The accompanying drawings are not intended to be drawn to scale. In the drawings, each identical or nearly identical component that is illustrated in various figures may be represented by a like numeral. For purposes of clarity, not every component may be labeled in every drawing. In the drawings:
FIG. 1 is a schematic representation of one embodiment of a system;
FIG. 2 depicts various precipitation areas within a region;
FIG. 3A is a flowchart representing one embodiment of a method of determining a likelihood of precipitation for an area;
FIG. 3B is a flowchart representing an alternative embodiment of the method of determining a likelihood of precipitation for an area of FIG. 3A;
FIG. 4A depicts one embodiment of a precipitation model;
FIG. 4B depicts one embodiment of a precipitation type model;
FIG. 5 is a flowchart representing one embodiment of a method of generating a precipitation estimation model;
FIG. 6 is a flowchart representing one embodiment of a method of determining a correlation between weather information and vehicle events;
FIG. 7 depicts various precipitation areas within a region;
FIG. 8 is a flowchart representing one embodiment of a method of receiving and responding to a request for weather information;
FIG. 9 depicts one embodiment of a user interface for a precipitation model; and
FIG. 10 is a schematic representation of one embodiment of software.

### DETAILED DESCRIPTION

Described herein are examples of methods of determining a likelihood of active precipitation in an area using telematics data for one or more vehicles in the area. In some cases, the telematics data includes windshield wiper data. For each vehicle, it may be determined that there is precipitation when the duration of windshield wiper use exceeds a predetermined threshold, and may determine that there is not precipitation when the duration of windshield wiper use does not exceed the predetermined threshold. These vehicle-specific determinations regarding the state of precipitation may be used in a precipitation model to determine an overall likelihood of active precipitation in the area. In some cases, the type of precipitation (e.g., rain vs. snow) may be determined by considering temperature information associated with the area. In some cases, vehicles may be rerouted based on the likelihood and/or type of precipitation.

Also described herein are examples of methods of determining a correlation between weather information and vehicle events associated with a segment of road. Telematics data may be analyzed to identify vehicle events such as harsh accelerations and/or ABS activation. Upon identifying a strong correlation between certain vehicle events (e.g., harsh braking) and certain weather information (e.g., snow), certain characteristics of a segment of road may be designated as weather dependent. If, for example, the safety of a segment of road is identified as weather dependent, a notification may be issued, such as alerting municipal services that snow plowing may be advisable.

Weather events such as precipitation may affect both road conditions and driver behavior. Accordingly, access to accurate weather information may be beneficial for a driver. However, weather information is often quite coarse geographically. That is, weather information may be available for a relatively large region, but location-specific weather information may be unavailable. For example, weather stations may be able to provide weather information at a resolution on the order of a kilometer, but may be unable to provide weather information at a finer resolution.

To choose a driving route, a driver may wish to know the current precipitation state of a particular road. As such, a driver may consult a weather forecast for the associated region that gives a chance of precipitation for the region as a whole. However, a given region for which weather information is available may be quite large, and the state of precipitation may vary meaningfully within that single region. As such, the driver may remain uncertain as to the chance that a particular road within that region might be experiencing active participation, even if the driver is able to access a weather forecast for the region as a whole.

In addition, road maintenance personnel may wish to have access to the current status of the roads for which they are responsible. Knowledge of current road conditions may enable more timely and more efficient distribution of resources. For example, knowing that a particular segment of road suffers from weather-related adverse driving events may allow maintenance personnel to concentrate their efforts on that particular segment of road.

In view of the above, the Inventors have recognized and appreciated that there may be certain benefits associated with determining precipitation information and to providing that information to different recipients. The different recipients may use the information in different ways. For example, a driver having access to precipitation information at a road-segment-level resolution may be able to tailor a driving route to avoid roads with poor driving conditions (e.g., roads on which it is actively raining) in favor of roads with good driving conditions (e.g., dry roads). Just as real-time or near-real-time traffic information at the resolution of individual roads may be used in route optimization, real-time or near-real-time weather information may be associated with certain benefits, particularly when the weather information is available with sufficiently fine resolution. As another example, personnel responsible for maintaining a road (e.g., governments, municipalities, road maintenance personnel) that have access to current and location-specific precipitation information may be able to identify and respond to unsafe road conditions in a more timely and more precise manner.

While the Inventors have recognized the advantages that would be offered by such information at a fine resolution (e.g., segment of a road level), they have also identified that no technique has existed that could reliably provide this information.

Currently, many vehicles are configured to collect and transmit information collected by sensors disposed in the vehicles or otherwise collected by or relating to components of the vehicles, such as through telematics devices installed in the vehicles. The information collected and transmitted may include telematics data for the vehicle. The telematics data collected (e.g., received) by telematics devices in a number of vehicles may be transmitted to a remote site for analysis, such as by processes running on one or more servers. The telematics data that is collected, transmitted, and analyzed may include data generated by a number of different sensors of a vehicle, such as ambient temperature sensors, fuel sensors, speed sensors, and so on.

As used herein, the term "telematics data" may refer to any data collected, received, analyzed, processed, communicated, or transmitted by a telematics device. As used herein, the term "telematics device" may refer to any device configured to monitor operation of a vehicle to which it is connected and to communicate data to a remote site. It should be appreciated that the term "telematics device" may refer to a device that is removably installed in and/or integral to a vehicle, as the present disclosure is not limited in this regard. For example, a telematics device may be configured to connect to a vehicle through an OBD II port or a CAN bus port, or may be integrated into a vehicle's central control system. It should be appreciated that the term "telematics device" may refer to hardware and/or software, as the present disclosure is not limited in this regard.

Some vehicles may be configured to directly sense moisture on a windshield, which may be used for automatic windshield wiper activation. Currently, such moisture detection sensors are uncommon in vehicles. Vehicles thus are usually not able to directly sense precipitation. Furthermore, even in a case that a vehicle is configured to directly sense moisture, the associated sensor data may not be able to determine the source of the moisture and, further, the data from that sensor may not be accessible as telematics data, such as by not being accessible to a telematics device for transmission from the vehicle. Such data may not be accessible as telematics data when, for example, the moisture sensor is not configured to convey moisture readings over an in-vehicle data bus, such as a controller area network (CAN) bus, that a telematics device may be monitoring for telematics data. As such, the Inventors recognized that moisture sensors are not a reliable source of precipitation information and thus directly sensing precipitation using vehicle sensors may be unachievable, unreliable, and/or otherwise undesirable.

Accordingly, the Inventors recognized and appreciated that while vehicles traveling in an area may be able to provide telematics data regarding the area, such telematics data is not directly indicative of precipitation and cannot be used to directly indicate whether an area in which a vehicle is traveling is experiencing precipitation.

The Inventors have additionally recognized and appreciated, however, that telematics data from vehicles travelling within an area may be analyzed to derive or otherwise determine precipitation information associated with that area. The Inventors recognized and appreciated, for example, that other telematics data may be used as one or more proxies to estimate active precipitation in an area. That is, precipitation may be sensed indirectly using one or more other signals associated with a vehicle. For example, windshield wiper activation may be used as a proxy for determining whether a vehicle is in an area with active precipitation. In such a technique, if a driver activates the windshield wiper, it may be determined that the vehicle is in an area of active precipitation. Conversely, if a driver does not activate the windshield wiper, it may be determined that the vehicle is not in an area of active precipitation.

However, the Inventors also recognized that windshield wiper use is not itself indicative of precipitation. Windshield wipers are used for a variety of purposes other than wiping water from precipitation off a windshield. Wipers may also be used, for example, following dispensing of cleaning liquid onto a windshield or otherwise to clean road spray, insects, or other material off of windshields. Thus, a mere indication of whether the windshield wipers were activated may provide some information, but may not be fully reliable as false positives could arise. Constraints and/or filters may be used to rule out such false positives. For example, windshield wiper use may only be associated with precipitation if the windshield wiper is continuously activated for an amount of time greater than a predetermined threshold (e.g., three minutes). Such constraints and/or filters may minimize the occurrence of false positives (e.g., a single-use activation of the windshield wiper to clean the windshield).

It should be appreciated that the present disclosure is directed to predicting the likelihood of present and/or past precipitation. In contrast to standard weather forecasting, in which a "chance of precipitation" is predictive of a future state (e.g., a weather forecast that predicts a 80% chance of rain tomorrow), the phrase "chance of precipitation" (and similar phraseology) as used herein should be understood as describing the likelihood that it was precipitating in an area in the past and/or that it currently is precipitating in the present. In the present disclosure, the analysis of telematics data that was collected over a given time period may yield insights that relate to that time period. If the data is analyzed in real-time or near-real-time, insights into the present state of precipitation may be drawn. If the data is analyzed at a later time (e.g., due to a lag time in collecting, transmitting, and/or processing the data), insights into a past state of precipitation may be drawn.

In some embodiments, an algorithm for precipitation determination may include determining a likelihood of precipitation in an area using telematics data associated with one or more vehicles in the area. Spatial and temporal boundaries may be set to define one or more areas and one or more time periods. For example, an area may be defined based on latitude and longitude positions, and a time period may be defined by a start time and an end time. It should be appreciated that any suitable area of any appropriate shape and/or size may be used. For example, an area may be a rectangular, hexagonal, or a non-uniform shape. It should be appreciated that any suitable time period may be used. For example, a time period may be a day, a six-hour period, a one-hour period, a twenty-minute period, a ten-minute period, a five-minute period, a one-minute period, a thirty-second period, a ten-second period, or a one-second period..

In some embodiments, one or more vehicles may transmit telematics data, which may include location data (e.g., GPS data) and/or time data. The telematics data may be analyzed to segment the data based on the area in which the vehicle was located when the data was collected (e.g., based on the location data), and/or the time period during which the data was collected (e.g., based on the time data). Over time, a large quantity of data may be collected from many different vehicles. As this data may include information that enables indexing by both time and location, conclusions may be drawn that are both temporally and spatially specific.

The telematics data may also include additional information that may be used in determining a likelihood of active precipitation in the area. For example, the telematics data may include windshield wiper activation data. Based at least in part on the telematics data, each vehicle may be associated with a vehicle-specific precipitation state. In some embodiments, determining a vehicle-specific precipitation state may include making a binary determination as to whether or not there is active precipitation at a location of the vehicle at a time the telematics data is collected. For example, analyzing the telematics data associated with a first vehicle may include identifying whether the telematics data indicates windshield wiper use by the first vehicle to an extent associated with active precipitation. Such an extent may be, for example, continuous windshield wiper activation for a length of time above a predetermined time threshold. In response to determining this condition is met, a vehicle-specific precipitation state may be determined for the first vehicle that is indicative of the vehicle experiencing precipitation (e.g., PRECIP = YES). Similarly, if an analysis of telematics data associated with a second vehicle in the same area during the same time period concludes that windshield wiper use by the second vehicle is at an extent not associated with active precipitation, such as no windshield wiper activation or windshield wiper activation below a predetermined time threshold, the second vehicle may be associated with a vehicle-specific precipitation state indicative of no precipitation (e.g., PRECIP = NO). The individual vehicle-specific precipitation states associated with each available vehicle in the area during the time period may be aggregated and analyzed to determine an overall likelihood of precipitation in the area. For example, if there are ten vehicles in the area in the time period, three vehicles may indicate active precipitation, and seven vehicles may indicate no active precipitation. This information may be used to generate an estimate of the overall likelihood of precipitation for the area, as explained below. It should be appreciated that while the vehicle-specific precipitation states may be binary values (e.g., PRECIP = YES or PRECIP = NO), the overall likelihood of active precipitation in the area may be expressed as a probability (e.g., 10% chance of precipitation). However, in some embodiments, the overall likelihood of precipitation in the area may be expressed as binary determination, as the present disclosure is not limited in this regard.

A relationship between the vehicle-specific precipitation states and the overall likelihood of precipitation in the area may be expressed using a precipitation model. Generally, a precipitation model may take as input one or more vehicle-specific precipitation states and generate as output a likelihood of precipitation in the area. In some embodiments, a precipitation model may include a trained classifier. To train the classifier, a region of interest may first be divided into a plurality of areas. It should be appreciated that any suitable partitioning system or convention may be used, as the present disclosure is not limited in this regard. For example, a Geohash map may be created for a region such that the region is subdivided into a plurality of areas (e.g., a plurality of 153-meter by 153-meter square areas). In some embodiments, an area may be associated with a Geohash length of six or more characters. For example, an area may be associated with a Geohash length of seven characters (i.e., Geohash 7). It should be appreciated that any curve type spatial partitioning and sub-partitioning system may be appropriate, including but not limited to S2 cells and H3 cells. A region of interest may alternatively be partitioned based on custom geographic regions and/or based on a road network divided into appropriately sized road segments. In some embodiments, a region may be partitioned according to geopolitical boundaries. For example, a region may be partitioned into areas associated with different zip codes, traffic analysis zones, or other geopolitical areas. A training set used to train the classifier may include a set of windshield wiper activation data (indexed by location and time) and corresponding precipitation labels. The precipitation labels may include historical precipitation data that may be used as a ground truth in training the classifier. For example, data from NASA's Global Precipitation Measurement project may be used to provide the precipitation labels. For each area, the total number of vehicles in the area during a chosen time period (V_{T}) may be calculated. Similarly, the total number of vehicles in the area with activated windshield wipers (V_{A}) during the chosen time period may also be calculated. As described above, various filters and/or constraints may be employed when defining an active vehicle (e.g., a minimum duration of windshield wiper activation). Using the percentage of the total vehicles that are active (i.e., V_{A}/V_{T}) and the ground truth precipitation labels, a precipitation model may be derived that expresses a relationship between the percentage of active vehicles and the chance of precipitation. After the precipitation model has been trained using historical data, the precipitation model may be used in real-time or in near-real-time to predict a likelihood of precipitation for an area using a percentage of active vehicles in the area as input.

In some embodiments, a precipitation model may be a logistic regression model. A logistic regression model may be associated with certain benefits related to ease of implementation, speed of training, and overall simplicity. However, it should be appreciated that other types of models may be used. For example, in some embodiments, a precipitation model may be a linear regression model, a support vector machine, a neural network, a nearest neighbor model, or any other suitable model, as the present disclosure is not limited in this regard.

At times, a particular area may not include enough vehicles to make a sufficiently informed estimate of the precipitation state. That is, in some embodiments, one filter associated with the algorithm may include ensuring that an area includes a number of vehicles in excess of a threshold before initiating the algorithm. In situations in which a precipitation estimate is not available for an area based on telematics data from vehicles associated with that area (whether due to insufficient telematics data arising from too few vehicles, or due to any other reason), a precipitation estimate for that area may nonetheless be generated. In some cases, a precipitation estimate for an area with a low vehicle count may be generated by interpolating precipitation estimates from neighboring areas. For example, a region may be divided into multiple rectangular areas of consistent shape and size (e.g., the region may be divided into a rectangular grid), such that each area includes four immediate neighboring areas (e.g., areas that share an edge) and four partial neighboring areas (e.g., areas that share a corner point). If a precipitation estimate is not available for an area within the region, a precipitation estimate for that area may be generated by interpolating precipitation estimates from the immediate and/or partial neighboring areas. In some embodiments, an interpolated precipitation estimate for the area may include a simple average of the four precipitation estimates associated with the four immediate neighboring areas. In some embodiments, an interpolated precipitation estimate for the area may include a weighted average of the four precipitation estimates associated with the four immediate neighboring areas and the four precipitation estimates associated with the four partial neighboring areas. For example, the immediate neighboring areas may be weighted more heavily in the average than the partial neighboring areas. It should be appreciated that different interpolation schemes may be suitable, and that regions may be appropriately divided into areas with different shapes and/or sizes, as the present disclosure is not limited in this regard.

In some embodiments, a process for precipitation determination may additionally include determining a type of precipitation in an area using temperature data associated with the area. After the likelihood of precipitation in an area is determined, additional information may be considered to predict a type of precipitation. In some embodiments, temperature information may be used as an input to a precipitation type model to predict a type of precipitation, such as whether the precipitation is likely to be rain or snow. It should be appreciated that the information used to predict a type of precipitation as well as the potential types of precipitation predicted need not be limited to the above example. Information used to predict a type of precipitation may include temperature information, pressure information, altitude information, and/or any other suitable information that may inform a prediction of a type of precipitation. The information used to predict a type of precipitation may be associated with a vehicle (e.g., collected by one or more sensors associated with one or more vehicles in the area of interest), or may be otherwise obtained (e.g., by consulting a weather forecast for the region in which the area of interest is located). Potential types of precipitation may include rain, snow, sleet, hail, fog, or any other type of precipitation. Additionally or alternatively, a precipitation type may be characterized as liquid, solid, or mixed.

The Inventors have recognized and appreciated that precipitation data may be used for a variety of applications. As mentioned above, precipitation information may be used as a factor in route selection for a vehicle. In conventional route selection, a route from an initial position to a target destination may be selected based on parameters such as speed limits and/or current traffic conditions. In some cases, a user may specify a preference for certain parameters (e.g., a user may specify that toll roads should be avoided if possible). In a similar way, precipitation information may be included as a parameter for route selection. For example, a user may specify to a route selection program that dry roads with no active precipitation are to be prioritized over roads on which it is actively raining, even if the total driving time or driving distance is increased (e.g., within a threshold). As would be appreciated by one of skill in the art, precipitation information may be one of a plurality of parameters used to select an appropriate route, and may be associated with different weights in different instances of route selection.

The Inventors have additionally recognized and appreciated that precipitation data may be used in smart city applications. At a high level, a smart city may be a city that collects and analyzes information (e.g., real-time sensor data) to make informed decisions. For example, precipitation data may be used to understand which roads and/or road segments may be associated with weather related driving risks, as explained in greater detail below.

As described above, telematics data collected from one or more vehicles may include location data and/or time data. As such, telematics data may be associated with a road and/or a road segment on which the vehicle was driving during a time period when the telematics data was collected. As used herein, a road may be understood as a public or private right of way on which a vehicle operates, and a road segment may be understood to be a portion of a road. As also described above, telematics data may include other information in addition to location and/or time data. Particularly, telematics data may include information indicative of certain vehicle events. In some cases, vehicle events of interest may include harsh vehicle events, such as harsh acceleration (e.g., harsh braking, harsh cornering), and/or ABS activation. Using location data, time data, and vehicle data indicative of certain vehicle events, a timeline of the occurrence of certain vehicle events on a road segment may be determined.

Using the methods of precipitation determination described above, a timeline of precipitation information may similarly be determined for the same road segment. Alternatively, more traditional sources of weather information (e.g., weather forecasts, published historical weather information) may be used. Regardless of the source of weather information, by having access to both weather information (for a segment of road, for a given time period) and information relating to harsh vehicle events (for the same segment of road for the same time period), a correlation may be determined between the weather information and the vehicle events. If a strong correlation exists between the weather information and the occurrence of vehicle events for the road segment (e.g., if the correlation is determined to be above a predetermined threshold), the safety of that road segment may be designated as weather dependent. Conversely, if a weak correlation exists between the weather information and the occurrence of vehicle events for the road segment (e.g., if the correlation is determined to be below a predetermined threshold), the safety of that road segment may be designated as weather independent. For example, weather information associated with a particular road segment may be analyzed according to precipitation. If the rate of a certain vehicle event (e.g., harsh braking) increases significantly when there is active precipitation compared to when there is not active precipitation, the safety of that segment of road may be designated as weather dependent. In some embodiments, the telematics data and the weather information may be analyzed to determine why a segment of road is safe or unsafe, in addition to making a determination that a segment of road is safe or unsafe. For example, if the rate of ABS activation is positively correlated with recent precipitation and low temperatures, it may be determined that the road segment may be unsafe due to icy conditions.

It should be appreciated that such determinations of road safety may be updated at any suitable interval, and in some embodiments may be available in real-time or near-real-time. For example, a determination of road safety may be updated hourly (or at any other appropriate interval) throughout a day, and may change from one time period to the next due to, for example, changing weather conditions and/or changing traffic conditions.

Upon determining that a road segment is unsafe due to weather related conditions, appropriate action may be taken. For instance, vehicles may be rerouted (e.g., to avoid an icy road). Additionally or alternatively, a notification may be issued to relevant third parties. For example, individuals responsible for road maintenance may be alerted that a road segment has been identified as unsafe for weather related reasons, and may be advised to attend to the road segment. In some embodiments, specific information relating to the condition of the road segment may be included in a notification. For example, road maintenance personnel may be alerted that a particular road segment is likely to be icy, and may be advised to salt or otherwise treat that segment of road. In addition to rerouting of vehicles and providing real-time or near-real-time road condition information to maintenance personnel, weather related road safety information may be provided to weather forecasting organizations to improve their models.

As used herein, telematics data may include data relating to a vehicle or operation of a vehicle. Telematics data may be associated with a telematics device that is installed in or integrated with a vehicle. The telematics device may receive and/or transmit the telematics data. The telematics device may receive the telematics data through a communications port with the vehicle, such as through an OBD port. Telematics data may include data not typically broadcast on a CAN bus. For example, windshield wiper data may not typically be included in a standard CAN bus signal. However, CAN bus signals may be reverse engineered to determine which signals are indicative of windshield wiper use. While telematics data may be associated with a telematics device connected to a vehicle, telematics data may additionally or alternatively be associated with one or more other devices. For example, telematics data relating to a vehicle or operation of a vehicle may be collected, received, and/or transmitted using an application on a smartphone. For example, telematics data related to vehicle location may be associated with location information from a smartphone. As another example, harsh acceleration of a vehicle may be ascertained using data from one or more accelerometers of a smartphone.

Turning to the figures, specific non-limiting embodiments are described in further detail. It should be understood that the various systems, components, features, and methods described relative to these embodiments may be used either individually and/or in any desired combination as the disclosure is not limited to only the specific embodiments described herein.

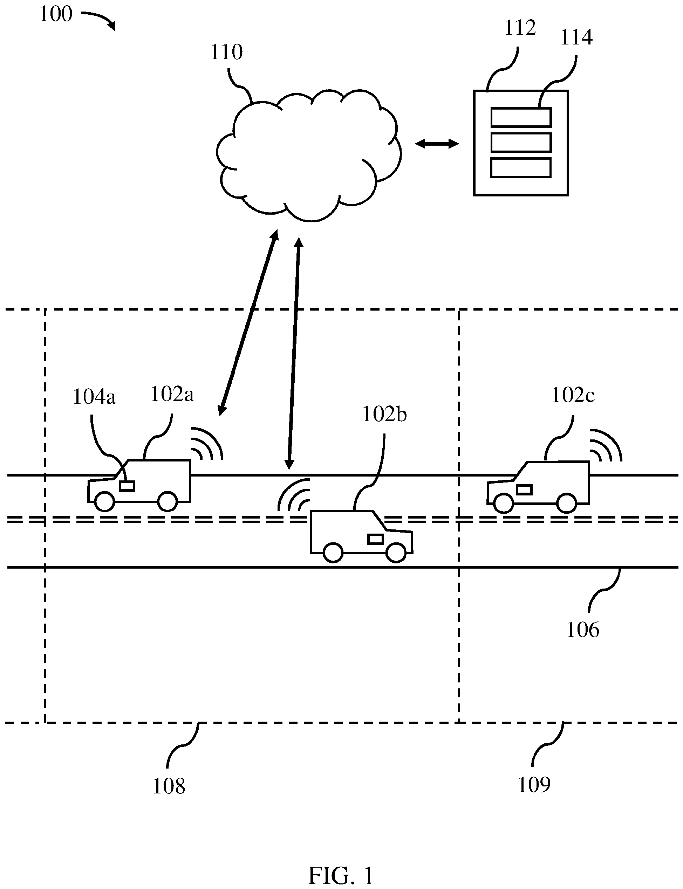

FIG. 1 is a schematic representation of one embodiment of a system 100 for precipitation estimation. The system 100 includes multiple vehicles 102 such as vehicles 102a, 102b, and 102c. Each vehicle 102 may be associated with a telematics device 104 (e.g., vehicle 102a is associated with telematics device 104a). Each telematics device 104 is configured to collect (or otherwise receive) telematics data and to transmit the telematics data through a communication network 110 to one or more destinations. Such destinations may include a server 112. While, for ease of illustration, one server 112 is shown, it should be appreciated that server 112 may be implemented as one or more servers, including a distributed system of servers that operate together, such as a cloud service. Such server(s) 112 may be implemented as any suitable form of computing hardware, as embodiments are not limited in this respect. The server 112 may include software such as a precipitation estimation facility 114 that carries out the techniques described herein. It should be appreciated that a precipitation estimation facility need not be associated with a server, but rather that a precipitation estimation facility may be executed on any suitable hardware, as the present disclosure is not limited in this regard.

The telematics device 104 of FIG. 1 may include suitable hardware and/or software configured to collect, sense, receive, process, store, and/or transmit any appropriate telematics data associated with a vehicle. A telematics device may be integrated into the vehicle, or may be removably connected to a vehicle, such as through a diagnostic port (e.g., an on-board diagnostics (OBD) or OBD-II port). In some embodiments, a telematics device 104 may include a hand-held device, which may include a mobile device such as a cellular telephone or smartphone. The telematics device 104 may communicate with one or more components of the vehicle 102 or otherwise receive from the vehicle 102 telematics data related to the vehicle 102. The telematics device 104 may then transmit the telematics data from the device 104 and vehicle 102, to a destination remote from the vehicle 102.

Transmission by the telematics device 104 via the network(s) 110 may include any suitable transmission technique, including communication to a satellite, through a ground-based station, over a cellular network, over a computer network, over the Internet, and/or using any other suitable channel. Accordingly, network(s) 110 may include any suitable one or combination of wired and/or wireless, local- and/or wide-area communication networks, including one or more private or enterprise networks and/or the Internet. In some embodiments, telematics device 104 may transmit data using a wireless connection to a wireless wide area network (WWAN) such as a cellular network, after which it may be transmitted via one or more other networks (e.g., wired networks) to a destination such as a server 112. In some embodiments, a telematics device 104 streams data (e.g., contemporaneously with the data being generated and/or received by the telematics device 104, or in real time) to the server 112 via the network(s) 110.

As described above, telematics data may be segmented based on a location and/or a time at which the data was collected. For example, telematics data may be associated with a particular geographic area if the telematics data was collected at a location within a perimeter of that geographic area. Similarly, telematics data may be associated with a particular time period if the telematics data was collected at a time within that time period. Referring to FIG. 1, two vehicles 102a and 102b travelling on a road 106 are located within a first area 108, while a third vehicle 102c travelling on the same road 106 is located within a second area 109. Accordingly, data collected from either vehicle 102a or vehicle 102b will be associated with the first area 108, while data collected from vehicle 102c will be associated with the second area 109. Of course, as a vehicle moves, it will pass from one area to another area. For example, vehicle 102b is currently in area 108 but is headed toward area 109, and vehicle 102c is currently in area 109 but is headed toward area 108. Accordingly, a vehicle's telematics data is associated with the area in which the vehicle was located at the time the telematics data was collected.

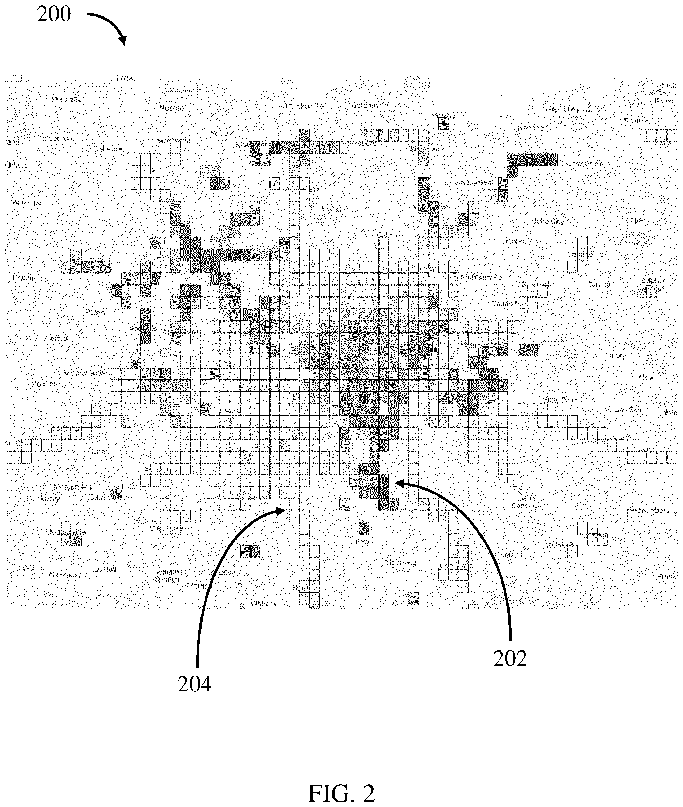

After the telematics data from multiple vehicles has been associated with a particular area, the data may be analyzed to estimate the likelihood that the area is currently experiencing (or recently experienced) precipitation. This precipitation estimation may be conducted for each area within a region for which there is sufficient data to draw a conclusion. FIG. 2 depicts a large region 200 that has been subdivided into a number of smaller areas. This type of map may allow a user to quickly assess areas in which there is relatively high or low precipitation. Darker shading indicates areas that are predicted to have a higher chance of active precipitation. For example, there is a high chance of active precipitation in area 202. Lighter shading indicates areas that are predicted to have a lower chance of active precipitation. For example, there is a low chance of active precipitation in area 204. Such a map may reflect real-time or near-real-time estimates of active precipitation at a fine spatial resolution. Just as real-time traffic information is valuable information in route selection, this detailed level of precipitation estimation may be used, for example, to reroute a vehicle around an area with heavy precipitation.

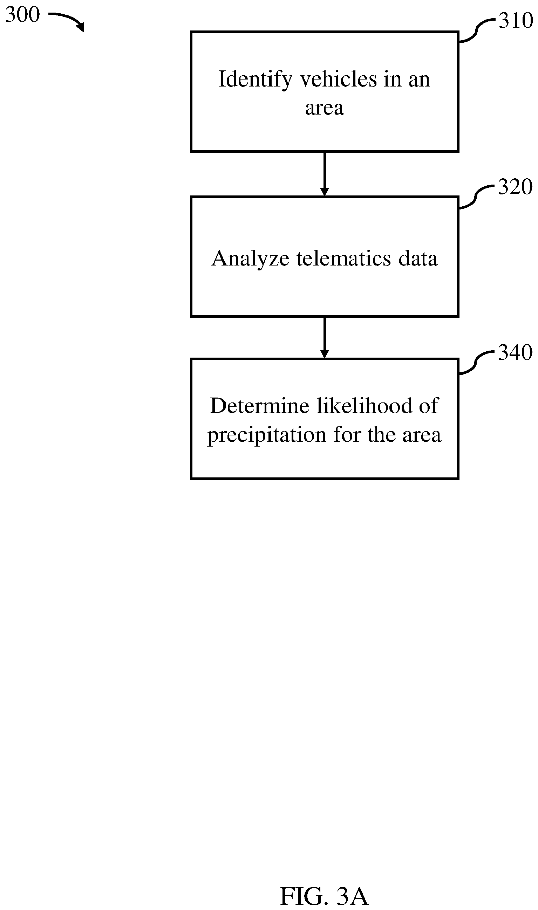

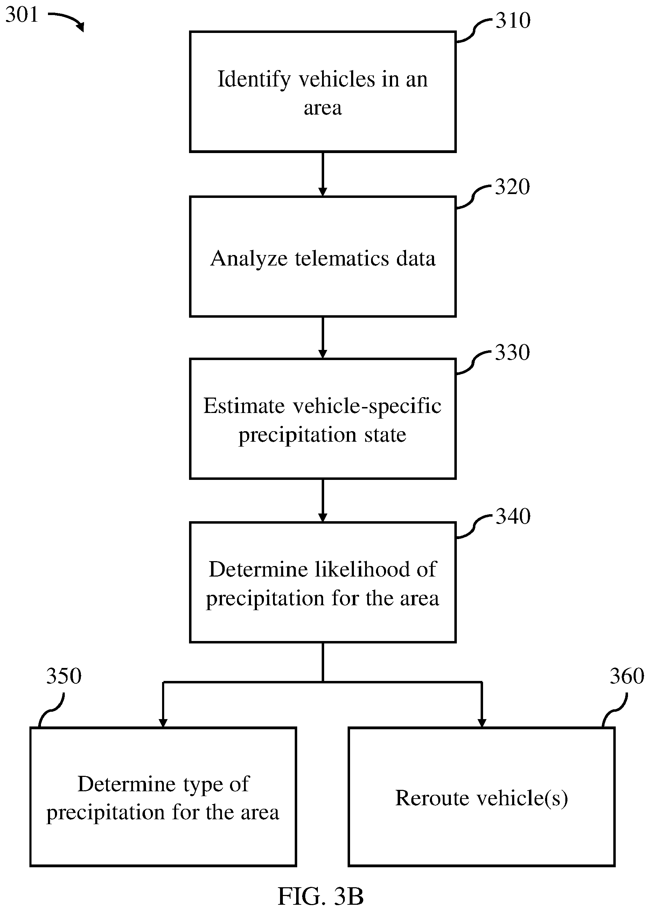

FIG. 3A is a flowchart representing one embodiment of a method 300 of determining a likelihood of precipitation for an area. The method 300 may, for example, be executed by software, such as a precipitation estimation facility (e.g., the precipitation estimation facility 114 of FIG. 1). At block 310, the precipitation estimation facility identifies the vehicles within an area, such that the telematics data collected from vehicles within the area may be associated with the area. As described above, telematics data may include location and/or time information such that data may be segmented into appropriate areas and/or periods of time. At block 320, the precipitation estimation facility analyzes the telematics data associated with the vehicles in the area. Analyzing telematics data may include associating telematics data with an area and/or a time period, associating telematics data with a vehicle, and/or processing telematics data to estimate a precipitation state (e.g., processing windshield wiper activation data), as explained in greater detail below in reference to FIG. 3B. At block 340, the precipitation estimation facility determines the likelihood of precipitation for the area using the telematics data from the vehicles in the area.

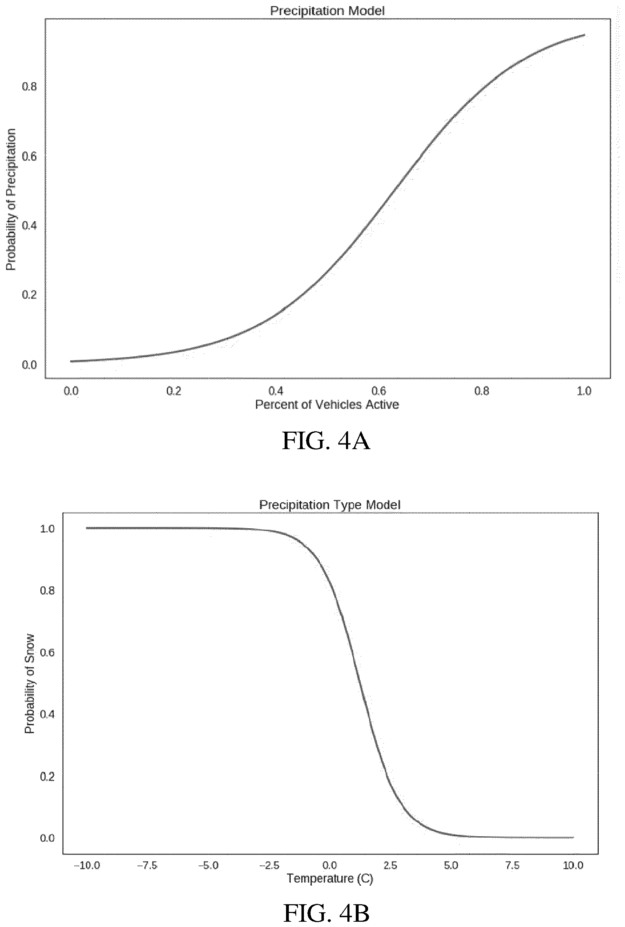

FIG. 3B is a flowchart representing an alternative embodiment of a method 301 of determining a likelihood of precipitation for an area. As in the method 300 of FIG. 3A, the method 301 of FIG. 3B includes block 310 at which the precipitation estimation facility identifies the vehicles within an area and block 320 at which the precipitation estimation facility analyzes the telematics data associated with the vehicles in the area. At block 330, the precipitation estimation facility uses the analyzed telematics data to estimate vehicle-specific precipitation states. As explained above, each vehicle's telematics data may be analyzed separately to make a determination as to whether or not there is active precipitation at a location of the vehicle at a time the telematics data is collected (e.g., PRECIP = YES or PRECIP = NO). For example, windshield wiper activation above a minimum time threshold (e.g., consistent windshield wiper use for at least three consecutive minutes) may be associated with a vehicle-specific precipitation state indicative of precipitation, and windshield wiper activation below the minimum time threshold may be associated with a vehicle-specific precipitation state indicative of no precipitation. As before, at block 340, the precipitation estimation facility determines the likelihood of precipitation for the area using the telematics data associated with the vehicles in the area. Determining the likelihood of precipitation for the area may include determining the likelihood of precipitation for the area based on the vehicle-specific precipitation states of each of the vehicles identified at block 310. As described in greater detail below in reference to FIG. 4A, the vehicle-specific precipitation states may be aggregated and input into a precipitation model that estimates a likelihood of precipitation. Afterwards, the precipitation estimation facility may determine a type of precipitation for the area, as at block 350 (and as described in greater detail below in reference to FIG. 4B), and/or may reroute one or more vehicles, as at block 360. For example, if a particular area is determined to be associated with a high chance of active precipitation, a vehicle may be rerouted to avoid driving through that area.

It should be appreciated that while, in the present disclosure, the example of windshield wiper activation as a proxy for the determination of precipitation is described, any suitable proxy for determining precipitation may be used, as the present disclosure is not limited in this regard. A partial and non-limiting list of example proxies for determining precipitation includes: windshield wiper activation, windshield rain sensors, humidity sensors, or cameras.

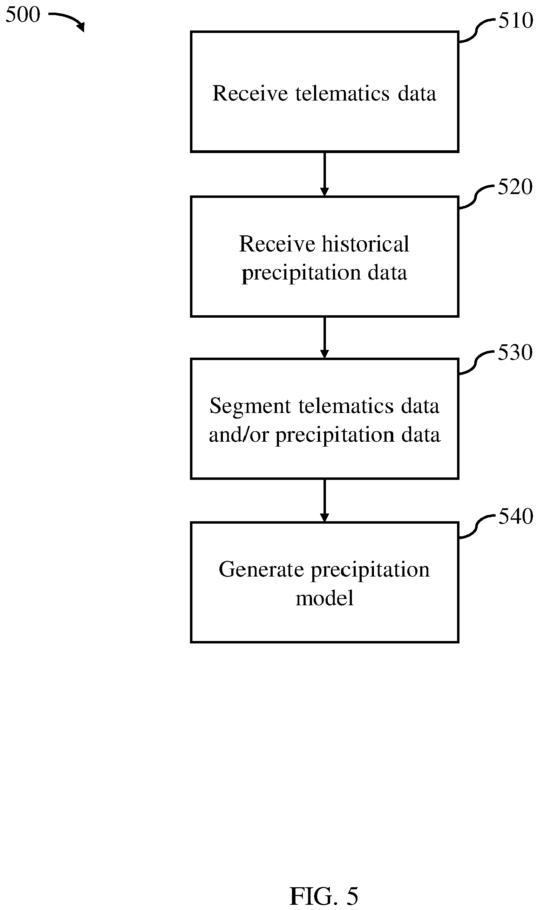

FIG. 4A depicts one embodiment of a precipitation model. A precipitation model may express a relationship between the vehicle-specific precipitation states and the overall likelihood of precipitation in an area. As described above, the total number of vehicles in the area during a chosen time period (V_{T}) may be calculated, such as at blocks 310 of FIGs. 3A and 3B. Similarly, the total number of vehicles in the area with activated windshield wipers (Va) during the chosen time period may also be calculated, such as at blocks 320 of FIGs. 3A and 3B during which telematics data is analyzed. A precipitation model may estimate a likelihood of precipitation in an area based on an input of the percentage of the total vehicles that are active (i.e., V_{A}/V_{T}). For example, the precipitation model of FIG. 4A predicts that if only 10% of vehicles are active in an area for a given time period, the likelihood that it was precipitating in that area during that time period is very low (e.g., less than 5%). Similarly, the precipitation model of FIG. 4A predicts that if 50% of vehicles are active, the likelihood that it was precipitating is approximately 25%, and that if 90% of vehicles are active, the likelihood that it was precipitating is approximately 90%. It should be appreciated that the specific precipitation model of FIG. 4A is only one example of a possible precipitation model, and should not be construed as limiting. Different relationships between a likelihood of precipitation in an area and a percentage of the total vehicles that are active may be determined (see FIG. 5 below regarding a method of generating a precipitation model). Additionally, while the precipitation model of FIG. 4A is a logistic regression model, it should be appreciated that any suitable type of model may be used, as the present disclosure is not limited in this regard.

FIG. 4B depicts one embodiment of a precipitation type model. The precipitation type model of FIG. 4B estimates a chance of snow as a function of temperature. For example, the precipitation type model of FIG. 4B predicts that if the temperature is 0°C, the likelihood that the precipitation was snow is approximately 80%, and that if the temperature is 2.5°C, the likelihood that the precipitation was snow is approximately 20%. It should be appreciated that the specific precipitation type model of FIG. 4B is only one example of a possible precipitation type model, and should not be construed as limiting. Other precipitation type models may include alternative or additional inputs (e.g., pressure, altitude), and may include alternative or additional outputs.

FIG. 5 is a flowchart representing one embodiment of a method 500 of generating a precipitation model. In some embodiments, generating a precipitation model may include training a classifier. Often, to train a precipitation model, a large amount of labeled training data is used. That is, a large dataset comprising telematics data (e.g., windshield wiper activation data indexed by location and time) and the associated precipitation state (e.g., whether or not it was precipitating at a particular location at a particular time) is assembled. Accordingly, at block 510, telematics data is received, and at block 520, historical precipitation data is received. As described above, historical precipitation data may include data from NASA's Global Precipitation Measurement project, although it should be appreciated that any precipitation dataset with sufficiently fine spatial and/or temporal resolution may be used to train a precipitation model, as the present disclosure is not limited in this regard. At block 530, the telematics data and/or the historical precipitation data is segmented by area and/or by time period. After such segmentation, each area and each time period may be associated with specific telematics data (e.g., the percentage of vehicles in that area during that time period with active windshield wiper use) as well as a specific precipitation state (e.g., it was precipitating in that area during that time period). At block 540, a precipitation model is generated using the segmented data. It should be appreciated that a precipitation model may be generated using any standard techniques for estimating a relationship between dependent and independent variables. Modelling techniques may include statistical and/or machine learning techniques such as regression analysis, decision trees, neural networks, support vector machines, nearest neighbors, ensemble methods, or any other suitable technique, as the present disclosure is not limited in this regard.

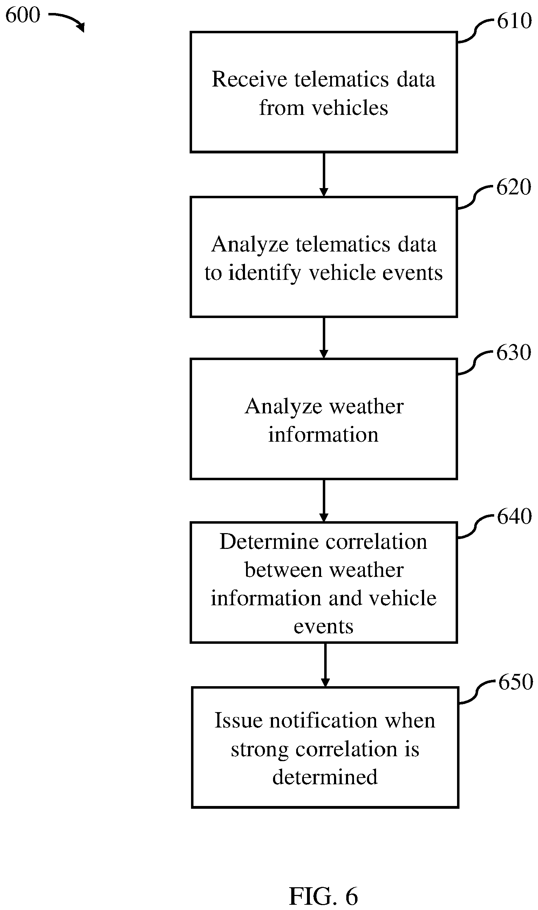

As described above, weather information may be useful in smart city applications. For example, weather information may be used to understand which roads and/or road segments may be associated with weather related driving risks. FIG. 6 is a flowchart representing one embodiment of a method 600 of determining a correlation between weather information and vehicle events. At block 610, a precipitation estimation facility receives telematics data from vehicles. As before, the telematics data may include data indicative of precipitation (e.g., windshield wiper use), and the telematics data may include location and/or time data (such that the telematics data may be associated with a particular segment of road and/or a particular time period). At block 620, the precipitation estimation facility analyzes the telematics data to identify vehicle events. As described previously, vehicle events of interest may include harsh vehicle events, such as harsh acceleration (e.g., harsh braking, harsh cornering), and/or ABS activation. At block 630, the precipitation estimation facility analyzes weather information. In some embodiments, weather information may include precipitation estimates generated using the techniques described herein, such as methods 300 and 301 of FIGs. 3A and 3B, respectively. In some embodiments, weather information may be derived from more traditional sources, such as a weather forecast. At block 640, the precipitation estimation facility determines a correlation between weather information and vehicle events. In line with statements made above in relation to FIG. 5, it should be appreciated that a correlation between weather information and vehicle events may be generated using any standard techniques for estimating a relationship between dependent and independent variables, as the present disclosure is not limited in this regard. A safety of a segment of road may be identified as weather dependent when a correlation between the weather information and the vehicle events is determined to be above a predetermined threshold. Similarly, a safety of a segment of road may be identified as weather independent when a correlation between the weather information and the vehicle events is determined to be below a predetermined threshold. At block 650, the precipitation estimation facility issues a notification if a strong correlation between weather information and vehicle events is determined. For example, if the correlation between weather information and vehicle events is determined to be above a predetermined threshold, a notification may be issued. For example, issuing a notification may include alerting road maintenance personnel that a particular road segment is likely to be icy, and advising the road personnel to salt or otherwise treat that segment of road.

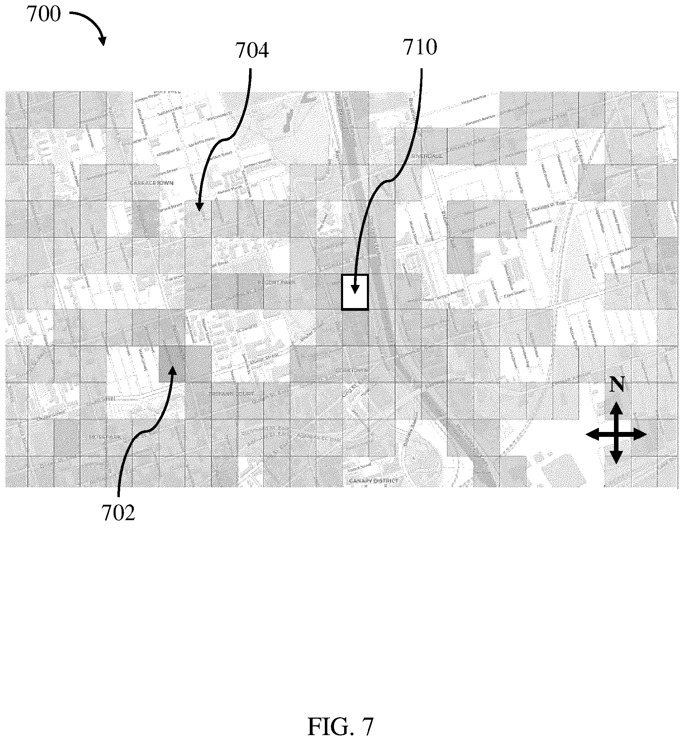

FIG. 7 depicts various precipitation areas within a region 700. Darker shading indicates areas that are predicted to have a higher chance of active precipitation. For example, there is a high chance of active precipitation in area 702. Lighter shading indicates areas that are predicted to have a lower chance of active precipitation. For example, there is a low chance of active precipitation in area 704. For some areas within the region 700, such as area 710, there is insufficient telematics data to draw a conclusion regarding the chance of active precipitation in that area. In some embodiments, areas for which there is insufficient telematics data may be associated with an undetermined chance of active precipitation. However, in some embodiments, a chance of active precipitation may be determined for areas for which there is insufficient telematics data by interpolating the chances of active precipitation from neighboring areas. For example, if the areas directly adjacent to area 710 (e.g., directly north, east, south, and west) are associated with precipitation estimates of 40%, 33%, 44%, and 35%, area 710 may be associated with an interpolated precipitation estimate of 38%, based on a simple average its neighbors' precipitation estimates. In other embodiments, weighted averages or other interpolation schemes may be used, as the present disclosure is not limited in this regard. Interpolation weights may be based on any appropriate parameter, including but not limited to distances between areas, a total number of vehicles in an area, a number of active vehicles in an area, an elevation difference between areas, or any other suitable parameter.

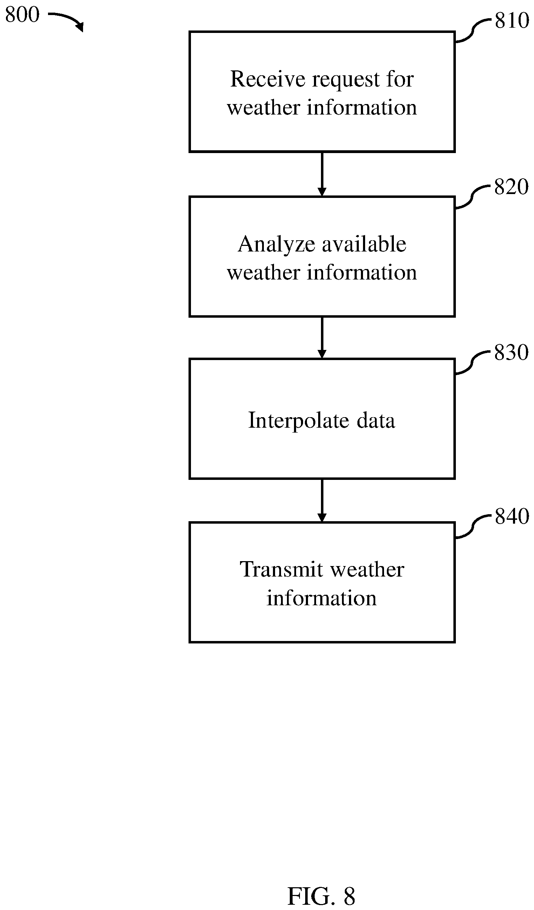

FIG. 8 is a flowchart representing one embodiment of a method 800 of receiving and responding to a request for weather information. At block 810, a precipitation estimation facility receives a request for weather information. For example, a driver operating a vehicle may want to know the weather status of an upcoming road. At block 820, the precipitation estimation facility analyzes the available weather information. For example, the precipitation estimation facility may use a precipitation model or a precipitation type model to determine a likelihood of precipitation for an area, consistent with the techniques described herein. At block 830, the precipitation estimation facility may interpolate data if data is unavailable for the area for which weather information was requested. Data interpolation at block 830 of method 800 may be consistent with data interpolation as described above (e.g., in relation to FIG. 7). At block 840, the precipitation estimation facility transmits weather information to the requester.

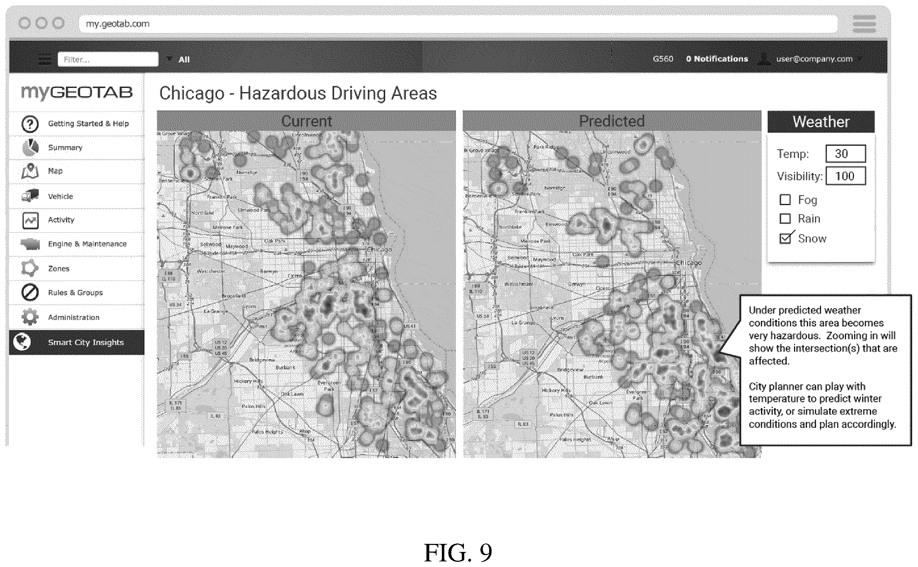

FIG. 9 depicts one embodiment of a user interface for a precipitation model. A user interface may enable a user to interact with a precipitation model (and/or a precipitation type model) in a more intuitive and natural manner. The user interface of FIG. 9 depicts two maps of a region. The map on the left depicts the current status of different areas within the larger region, while the map on the right depicts a predicted status of the different areas within the region based on user-selected values for various parameters. For example, a status of an area may be a weather-dependent safety of the area, and user-selectable parameters may include temperature and/or precipitation parameters. Such a user interface may enable a user to visualize how road conditions may be affected by changing weather activity.

Techniques operating according to the principles described herein may be implemented in any suitable manner. Included in the discussion above are a series of flow charts showing the steps and acts of various processes that distribute telematics data related to one or more vehicles to one or more recipients, in accordance with constraints and/or requests. The processing and decision blocks of the flow charts above represent steps and acts that may be included in algorithms that carry out these various processes. Algorithms derived from these processes may be implemented as software integrated with and directing the operation of one or more single- or multi-purpose processors, may be implemented as functionally-equivalent circuits such as a Digital Signal Processing (DSP) circuit or an Application-Specific Integrated Circuit (ASIC), or may be implemented in any other suitable manner. It should be appreciated that the flow charts included herein do not depict the syntax or operation of any particular circuit or of any particular programming language or type of programming language. Rather, the flow charts illustrate the functional information one skilled in the art may use to fabricate circuits or to implement computer software algorithms to perform the processing of a particular apparatus carrying out the types of techniques described herein. It should also be appreciated that, unless otherwise indicated herein, the particular sequence of steps and/or acts described in each flow chart is merely illustrative of the algorithms that may be implemented and can be varied in implementations and embodiments of the principles described herein.

Accordingly, in some embodiments, the techniques described herein may be embodied in computer-executable instructions implemented as software, including as application software, system software, firmware, middleware, embedded code, or any other suitable type of computer code. Such computer-executable instructions may be written using any of a number of suitable programming languages and/or programming or scripting tools, and also may be compiled as executable machine language code or intermediate code that is executed on a framework or virtual machine.

When techniques described herein are embodied as computer-executable instructions, these computer-executable instructions may be implemented in any suitable manner, including as a number of functional facilities, each providing one or more operations to complete execution of algorithms operating according to these techniques. A "functional facility," however instantiated, is a structural component of a computer system that, when integrated with and executed by one or more computers, causes the one or more computers to perform a specific operational role. A functional facility may be a portion of or an entire software element. For example, a functional facility may be implemented as a function of a process, or as a discrete process, or as any other suitable unit of processing. If techniques described herein are implemented as multiple functional facilities, each functional facility may be implemented in its own way; all need not be implemented the same way. Additionally, these functional facilities may be executed in parallel and/or serially, as appropriate, and may pass information between one another using a shared memory on the computer(s) on which they are executing, using a message passing protocol, or in any other suitable way.

Generally, functional facilities include routines, programs, objects, components, data structures, etc. that perform particular tasks or implement particular abstract data types. Typically, the functionality of the functional facilities may be combined or distributed as desired in the systems in which they operate. In some implementations, one or more functional facilities carrying out techniques herein may together form a complete software package. These functional facilities may, in alternative embodiments, be adapted to interact with other, unrelated functional facilities and/or processes, to implement a software program application, for example as a software program application.

Some exemplary functional facilities have been described herein for carrying out one or more tasks. It should be appreciated, though, that the functional facilities and division of tasks described is merely illustrative of the type of functional facilities that may implement the exemplary techniques described herein, and that embodiments are not limited to being implemented in any specific number, division, or type of functional facilities. In some implementations, all functionality may be implemented in a single functional facility. It should also be appreciated that, in some implementations, some of the functional facilities described herein may be implemented together with or separately from others (i.e., as a single unit or separate units), or some of these functional facilities may not be implemented.

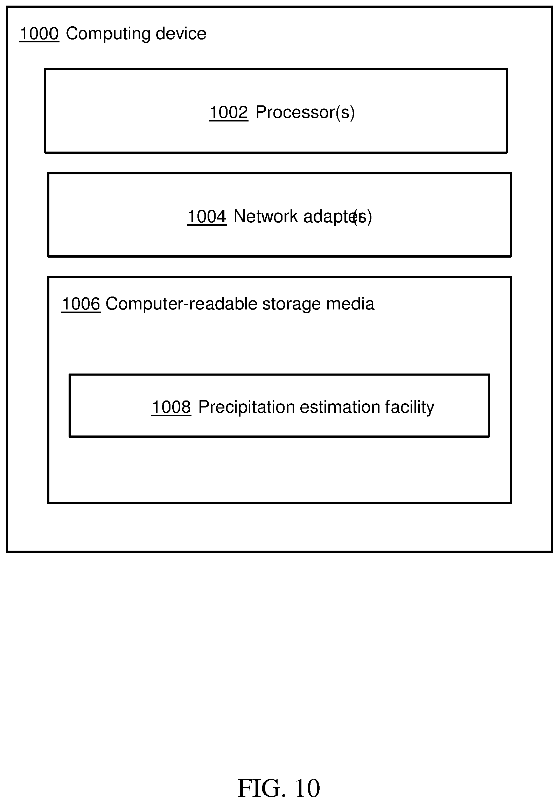

Computer-executable instructions implementing the techniques described herein (when implemented as one or more functional facilities or in any other manner) may, in some embodiments, be encoded on one or more computer-readable media to provide functionality to the media. Computer-readable media include magnetic media such as a hard disk drive, optical media such as a Compact Disk (CD) or a Digital Versatile Disk (DVD), a persistent or non-persistent solid-state memory (e.g., Flash memory, Magnetic RAM, etc.), or any other suitable storage media. Such a computer-readable medium may be implemented in any suitable manner, including as computer-readable storage media 1006 of FIG. 10 described below (i.e., as a portion of a computing device 1000) or as a stand-alone, separate storage medium. As used herein, "computer-readable media" (also called "computer-readable storage media") refers to tangible storage media. Tangible storage media are non-transitory and have at least one physical, structural component. In a "computer-readable medium," as used herein, at least one physical, structural component has at least one physical property that may be altered in some way during a process of creating the medium with embedded information, a process of recording information thereon, or any other process of encoding the medium with information. For example, a magnetization state of a portion of a physical structure of a computer-readable medium may be altered during a recording process.

In some, but not all, implementations in which the techniques may be embodied as computer-executable instructions, these instructions may be executed on one or more suitable computing device(s) operating in any suitable computer system, including the exemplary computer system of FIG. 1, or one or more computing devices (or one or more processors of one or more computing devices) may be programmed to execute the computer-executable instructions. A computing device or processor may be programmed to execute instructions when the instructions are stored in a manner accessible to the computing device or processor, such as in a data store (e.g., an on-chip cache or instruction register, a computer-readable storage medium accessible via a bus, a computer-readable storage medium accessible via one or more networks and accessible by the device/processor, etc.). Functional facilities comprising these computer-executable instructions may be integrated with and direct the operation of a single multi-purpose programmable digital computing device, a coordinated system of two or more multi-purpose computing device sharing processing power and jointly carrying out the techniques described herein, a single computing device or coordinated system of computing devices (co-located or geographically distributed) dedicated to executing the techniques described herein, one or more Field-Programmable Gate Arrays (FPGAs) for carrying out the techniques described herein, or any other suitable system.

FIG. 10 illustrates one exemplary implementation of a computing device in the form of a computing device 1000 that may be used in a system implementing techniques described herein, although others are possible. It should be appreciated that FIG. 10 is intended neither to be a depiction of necessary components for a computing device to operate as a telematics data distributor in accordance with the principles described herein, nor a comprehensive depiction.

Computing device 1000 may comprise at least one processor 1002, a network adapter 1004, and computer-readable storage media 1006. Computing device 1000 may be, for example, a desktop or laptop personal computer, a personal digital assistant (PDA), a smart mobile phone, a server, or any other suitable computing device. Network adapter 1004 may be any suitable hardware and/or software to enable the computing device 1000 to communicate wired and/or wirelessly with any other suitable computing device over any suitable computing network. The computing network may include wireless access points, switches, routers, gateways, and/or other networking equipment as well as any suitable wired and/or wireless communication medium or media for exchanging data between two or more computers, including the Internet. Computer-readable media 1006 may be adapted to store data to be processed and/or instructions to be executed by processor 1002. Processor 1002 enables processing of data and execution of instructions. The data and instructions may be stored on the computer-readable storage media 1006.

The data and instructions stored on computer-readable storage media 1006 may comprise computer-executable instructions implementing techniques which operate according to the principles described herein. In the example of FIG. 10, computer-readable storage media 1006 stores computer-executable instructions implementing various facilities and storing various information as described above. Computer-readable storage media 1006 may store a precipitation estimation facility 1008 that carries out any of the techniques described herein for estimation of precipitation.

While not illustrated in FIG. 10, a computing device may additionally have one or more components and peripherals, including input and output devices. These devices can be used, among other things, to present a user interface. Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computing device may receive input information through speech recognition or in other audible format.

Embodiments have been described where the techniques are implemented in circuitry and/or computer-executable instructions. It should be appreciated that some embodiments may be in the form of a method, of which at least one example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Various aspects of the embodiments described above may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," "having," "containing," "involving," and variations thereof herein, is meant to encompass the items listed thereafter and equivalents thereof as well as additional items.

The word "exemplary" is used herein to mean serving as an example, instance, or illustration. Any embodiment, implementation, process, feature, etc. described herein as exemplary should therefore be understood to be an illustrative example and should not be understood to be a preferred or advantageous example unless otherwise indicated.

Having thus described several aspects of at least one embodiment, it is to be appreciated that various alterations, modifications, and improvements will readily occur to those skilled in the art. Such alterations, modifications, and improvements are intended to be part of this disclosure, and are intended to be within the spirit and scope of the principles described herein. Accordingly, the foregoing description and drawings are by way of example only.

## Claims

1. A system comprising:
at least one processor; and
at least one storage medium having encoded thereon executable instructions that, when executed by the at least one processor, cause the at least one processor to carry out a method, wherein the method comprises:
estimating a chance of precipitation in an area, wherein estimating the chance of precipitation comprises:
identifying one or more vehicles in the area; and
determining the likelihood of precipitation using telematics data for the one or more vehicles in the area.

2. The system of claim 1, wherein determining the likelihood of precipitation comprises:
for each vehicle of the one or more vehicles:
analyzing the telematics data; and
estimating a vehicle-specific precipitation state based on the analyzed telematics data; and
determining the likelihood of precipitation based on the vehicle-specific precipitation states.

3. The system of claim 2, wherein for each vehicle:
the telematics data comprises windshield wiper data,
analyzing the telematics data comprises determining a duration of windshield wiper use, and
estimating the vehicle-specific precipitation state based on the analyzed telematics data comprises estimating the vehicle-specific precipitation state based on whether the duration of windshield wiper use exceeds a predetermined threshold.

4. The system of claim 2, wherein determining the likelihood of precipitation based on the vehicle-specific precipitation state of each vehicle comprises performing a logistic regression using the vehicle-specific precipitation states.

5. The system of claim 2, wherein estimating the vehicle-specific precipitation state comprises making a binary determination of whether there is precipitation or whether there is not precipitation.

6. The system of claim 5, wherein for each vehicle:
the telematics data comprises windshield wiper data,
analyzing the telematics data comprises determining a duration of windshield wiper use, and
making the binary determination of whether there is precipitation or whether there is not precipitation comprises:
determining that there is precipitation when the duration of windshield wiper use exceeds a predetermined threshold, and
determining that there is not precipitation when the duration of windshield wiper use does not exceed the predetermined threshold.

7. The system of claim 1, wherein the telematics data comprises location data, the method further comprising associating the likelihood of precipitation with the area when the location data is indicative of a position within the area.

8. The system of claim 7, wherein the area is less than or equal to 153m x 153m, or wherein the area is associated with a Geohash length of six or more characters.

9. The system of claim 1, wherein determining the likelihood of precipitation using the telematics data comprises determining the likelihood of precipitation using windshield wiper data.

10. The system of claim 9, wherein determining the likelihood of precipitation using windshield wiper data comprises determining the likelihood of precipitation using only windshield wiper data.

11. The system of claim 1, wherein the method further comprises determining a type of precipitation in the area.

12. The system of claim 11, wherein determining the type of precipitation comprises determining the type of precipitation based, at least in part, on temperature information.

13. The system of claim 12, wherein determining the type of precipitation based, at least in part, on temperature information comprises determining the type of precipitation based only on temperature information.

14. The system of claim 11, wherein determining the type of precipitation comprises determining rain and/or snow.

15. The system of claim 1, wherein the method further comprises rerouting at least one vehicle based, at least in part, on the likelihood of precipitation.

16. The system of claim 15, wherein rerouting the at least one vehicle comprises rerouting the at least one vehicle to avoid the area.
